# EUROPEAN PATENT APPLICATION

(11) **EP 3 964 283 A1**
(43) Date of publication of application: **09.03.2022**
(21) Application number: 20835067.8
(22) Date of filing: 23.03.2020
(51) Int. Cl.: B01J 3/02, B01J 4/00

(54) **SUGAR DRAWING APPARATUS AND POLYETHER POLYOL PRODUCTION SYSTEM**

(30) Priority: 02.07.2019 CN 201921030140 U
(71) Applicant: Jiahua Science&Technology Development (Shanghai ) Ltd., Shanghai 201210 (CN)
(72) Inventor: FAN, Junjian, Shanghai 201210 (CN); WU, Cheng, Shanghai 201210 (CN); YUAN, Jiuwei, Shanghai 201210 (CN); LI, Zhijun, Shanghai 201210 (CN); LI, Yubo, Shanghai 201210 (CN)
(74) Representative: Eyre, David Edward
(86) International application number: PCT/CN2020/080715
(87) International publication number: WO 2021/000607

(57) **Abstract**

A sugar drawing apparatus and a polyether polyol production system comprising same. The sugar drawing apparatus comprises: a sugar storage container (1), a feed port (11) being provided on the upper end of the sugar storage container(1) and a sugar storage cavity (12) being provided within the sugar storage container(1): a drawing pipeline(2) having one end extending into the sugar storage cavity (12) and the other end thereof extending out of the sugar storage container (1) and communicated with a reaction container, and used for transferring sugar in the sugar storage cavity (12) into the reaction container, and a sleeve (3) sleeved on the outside of the drawing pipeline (2), one end of the sleeve (3) extending into the sugar storage cavity (12) and the other end thereof extending out of the sugar storage container (1) and communicated with ambient air, and a flow channel for air to flow through being reserved between the sleeve (3) and the drawing pipeline (2).

## Description

### TECHNICAL FIELD

The present application belongs to the technical field of polyether polyol production equipment, and specifically relates to a sugar drawing apparatus and a polyether polyol production system.

### BACKGROUND

With the rapid development of the polyurethane industry, the output of polyurethane has been greatly improved. The production of polyether polyol sugar series is an important part of the polyurethane industry, and its status has also been greatly improved. As a starting agent, the amount of sugar used is also increasing sharply. The traditional method of adding sugar is to pour the sugar into the pool and extract it manually by holding a sugar-drawing hose. This method can no longer meet the needs of the work. Further, since sugar is easy to agglomerate, the sugar drawing pipeline is likely to be blocked, which seriously affects the production efficiency of the workshop.

For this purpose, Chinese patent application CN201823510A discloses a reaction kettle sugar drawing apparatus, comprising a reaction kettle and a sugar tank, wherein the sugar tank is connected to the reaction kettle through a sugar drawing pipeline, a sugar drawing control valve is installed on the sugar drawing pipeline, a buffer tank is installed at the connection of the sugar pumping pipeline, an instrument air vent pipe is connected to the sugar drawing pipeline, and an instrument air valve is installed on the instrument air vent pipe. By installing a buffer tank at the connection between the bottom of the sugar tank and the sugar drawing pipeline, sugar in the sugar tank firstly enters the buffer tank during the sugar pumping process of the reaction kettle, and if the sugar is agglomerated, a spare hole on the buffer tank can be directly opened to remove the agglomerated sugar. In the above-mentioned patent application, although the blockage of the drawing pipeline can be reduced through the arrangement of the buffer tank, it is necessary to manually and continuously take out the sugar lumps from the spare hole of the buffer tank because of the condensation of sugar lumps, and the condensed sugar lumps can only be used after being reheated and melted, which makes the production cost higher and the labor intensity higher.

### SUMMARY

Therefore, the technical problem to be solved by the present application is to overcome shortcomings of the sugar material in the prior art that sugar is easy to coagulate during the drawing process and blocks the drawing pipeline and the increase in production cost and labor intensity caused by coagulation of the sugar materials, thereby providing a sugar drawing apparatus and polyether polyol production system.

The present application provides a sugar drawing apparatus, comprising:
a sugar storage container, provided with a feed port thereon and a sugar storage cavity therein;
a drawing pipeline having one end extending into the sugar storage cavity and the other end extending out of the sugar storage container and communicated with a reaction container, and used for transferring sugar in the sugar storage cavity into the reaction container; and
a sleeve sleeved on the outside of the drawing pipeline, one end of the sleeve extending into the sugar storage cavity and the other end thereof extending out of the sugar storage container and communicated with ambient air, and a flow channel for air to flow through being reserved between the sleeve and the drawing pipeline.

Further, the sugar storage cavity is a trapezoidal groove having a top notch and a bottom notch, and the top notch has a width greater than that of the bottom notch.

Preferably, the sugar storage container comprises a plurality of inclined plates located at a side and at least one flat plate located at the bottom, and the inclined plates are polished plates.

Further, the flat plate and the inclined plates are connected through a circular arc transition connection.

Further, the sugar drawing apparatus further comprises a filter screen plate connected to a top end of the sugar storage container, and the filter screen plate is arranged on the feed port.

Further, a sugar drawing control valve is provided on the pumping pipeline.

Further, the sleeve and the drawing pipeline extend vertically into the sugar storage cavity.

Preferably, a distance of 8 mm to 12 mm is provided between an end face close to the bottom of the sugar storage cavity and the bottom of the sugar storage cavity, and a distance of 18 mm to 22mm is provided between an end face close to the bottom of the sugar storage cavity and the bottom of the sugar storage cavity.

The present application further comprises a polyether polyol production system, comprising the above-mentioned sugar drawing apparatus.

The technical solution of the present application has the following advantages:
1. The sugar drawing apparatus provided by the present application comprises a sugar storage container, provided with a feed port thereon and a sugar storage cavity therein; a drawing pipeline having one end extending into the sugar storage cavity, and the other end extending out of the sugar storage container and communicated with a reaction container, and used for transferring sugar in the sugar storage cavity into the reaction container; and a sleeve sleeved on the outside of the drawing pipeline, one end of the sleeve extending into the sugar storage cavity and the other end thereof extending out of the sugar storage container and communicated with ambient air, and a flow channel for air to flow through being reserved between the sleeve and the drawing pipeline. By providing a sleeve sleeved on the outside of the drawing pipeline, and a flow channel for air to flow through being reserved between the sleeve and the drawing pipeline, air enters the sleeve during the drawing process, and then is drew into the drawing pipeline together with the sugar to form a mixture of sugar and air, so that sugar can be pumped out smoothly without blocking the drawing pipeline, which greatly reduces the solidification and agglomeration caused by the blocking of sugar, accelerates the pumping speed, saves the labor cost and reduces the labor intensity.
2. In the sugar drawing apparatus provided by the present application, the sugar storage cavity is a trapezoidal groove having a top notch and a bottom notch, and the top notch has a width greater than that of the bottom notch, so that the sugar storage container presents an inverted pyramid shape. Under the action of gravity, the lower gap generated by sugar material pumping will be supplemented by sugar material falling from above, thus being continuously pumped by the drawing pipeline and forming a virtuous circle until sugar in the sugar storage container is completely pumped away, thereby accelerating the sugar pumping speed.
3. In the sugar drawing apparatus provided by the present application, the sugar storage container comprises a plurality of inclined plates located at a side and at least one flat plate located at the bottom, and the inclined plates are polished plates. The arrangement of the polished plates further reduces the resistance to the flow of sugar materials, so that the sugar materials at the upper part can be quickly supplemented into the gap at the lower part, thus accelerating the sugar pumping speed.
4. The sugar drawing apparatus provided by the present application further comprises a filter screen plate connected to a top end of the sugar storage container, and the filter screen plate is arranged on the feed port. Through the filtering effect of the filter screen plate to sugar, blocking of the drawing pipelines caused by coagulation of large sugar materials can be prevented, so that the sugar drawing process can be carried out smoothly.
5. In the sugar drawing apparatus provided by the present application, the flat plate and the inclined plates are connected through a circular arc transition connection, so that the accumulation and coagulation of sugar materials between the flat plate and the inclined plate can be improved, the pumping speed is further accelerated, the labor cost is saved, and the labor intensity is reduced.

### Description of the drawings

In order to more clearly illustrate the technical solutions of the embodiments of the present application or the prior art, a brief introduction will be given below on the accompanying drawings required to be used in the specific embodiments. Apparently, the accompanying drawings described below are some embodiments of the present application. For those skilled in the art, other accompanying drawings can be obtained based on these accompanying drawings without any creative effort.

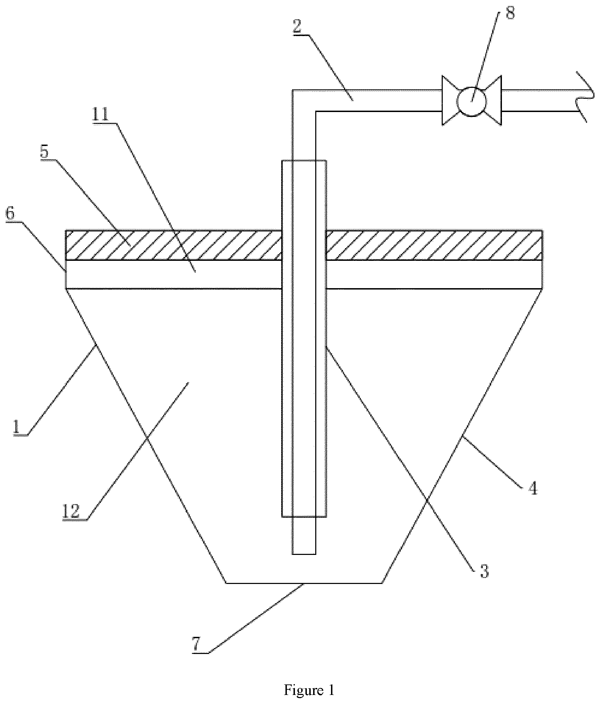

Figure 1 is a schematic structural diagram of a sugar drawing apparatus provided in the first embodiment of the present application;

Reference numbers:
1-sugar storage container; 11-feed port; 12-sugar storage cavity; 2-drawing pipeline; 3-sleeve; 4-inclined plate; 5- filter screen plate; 6-baffle; 7-flat plate; 8-sugar drawing control valve.

### Detailed Description of the Embodiments

The technical solutions of the present application will be described more clearly and fully hereinafter with reference to the accompanying drawings. The described embodiments are part of the embodiments of the application and not all embodiments. Based on the embodiments of the present application, all other embodiments obtained by an ordinary skill in the art without creative work are within the scope of protection of the present application.

In the description of the application, it should be noted that, the terms indicating the orientation or positional relationship, such as "center", "top", "bottom", "left", "right", "vertical", "horizontal", "inner", "outside", etc., are based on the orientation or positional relationship shown in the figures, and are merely for ease of description of the present application, but are not intended to indicate or imply that the indicated device or element must have a particular orientation, constructed and operated in a particular orientation, and therefore not to be construed as a limitation of the present application. In addition, the terms "first", "second" and "third" are used for descriptive purposes only and are not to be construed as indicating or implying relative importance.

In the description of the application, unless otherwise specified, it should be understood that the terms "mounted", "connection", "connected" are to be construed broadly, for example, may be a fixed connection, a detachable connection or an integrated connection; may be mechanical connection or electrical connection; may be direct connection, may also be indirect connection by an intermediate medium, or may be in communication with the interior of two elements. The specific meanings of the above-mentioned terms in the present application can be understood by one of ordinary skill in the art.

In addition, the technical features involved in the various embodiments of the application described below can be combined with each other as long as there is no conflict between each other.

### Embodiment 1

Provided is a sugar drawing apparatus, which comprises a sugar storage container 1, a drawing pipeline 2 and a sleeve 3, wherein, a feed port 11 is provided on the sugar storage container and a sugar storage cavity 12 is provided within the sugar storage container. As shown in figure 1, the sugar storage container 1 is either a sugar pool or a sugar tank, the feed port 11 is provided on at the top of the sugar pool. The sugar storage container 1 comprises a baffle 6 at the top and along the circumference, an inclined plate 4 at the side and along the circumference, and a flat plate 7 at the bottom.

One end of the drawing pipeline 2 extends into the sugar storage cavity and the other end extends out of the sugar storage container 1 and communicates with a reaction container. As shown in figure 1, the reaction container is a reaction kettle. The drawing pipeline 2 has an inlet end and an outlet end, wherein, the inlet end extends to the bottom of the sugar storage cavity 12, that is, the inlet end extends into the sugar material in the sugar storage cavity 12, and the outlet end is communicated with a feeding inlet of the reaction kettle to feed the sugar material in the sugar pool into the reaction kettle. A sugar drawing control valve 8 is provided on the drawing pipeline 2 to control the pumping rate. The distance between the end face of the inlet end of the drawing pipeline 2 and the bottom face of the sugar storage cavity 12 (i.e., the end face of the inlet end of the drawing pipeline 2 and the inner wall of the flat plate 7) is kept between 8 mm to 12 mm, so that the sugar in the sugar pool can be pumped away as much as possible while maintaining smooth pumping. In the present embodiment, the drawing pipeline 2 extends vertically into the sugar storage cavity 12 and is perpendicular to the flat plate 7. The distance between the end face of the inlet end of the drawing pipeline 2 and the inner wall of the flat plate 7 in the vertical direction is 8 mm to 12mm.

The sleeve 3 is sleeved on the outside of the drawing pipeline 2, one end of the sleeve 3 extends into the sugar storage cavity 12 and the other end thereof extends out of the sugar storage container 1 and is communicated with ambient air, and a flow channel for air to flow through is reserved between the sleeve 3 and the sugar storage cavity 2. As shown in figure 1, the flow channel is a gap, and the sleeve 3 is fixed in the sugar pool in the vertical direction, and extends to the bottom of the sugar storage cavity 12. One end of the sleeve 3 extends out of the sugar pool and communicates with the air, which is the upper end. The other end of the sleeve 3 extends to the bottom of the sugar storage cavity 12, which is the lower end. Air flows from the upper end of the sleeve 3 through the gap between the sleeve 3 and the drawing pipeline 2 and is pumped to the bottom of the sugar storage cavity 12 through the lower end of the sleeve 3, and is mixed into the sugar to form a mixture of sugar and air. The distance between the lower end face of the sleeve 3 and the bottom face of the sugar storage cavity 12 (i.e., the lower end face of the sleeve 3 and the inner wall of the flat plate 7) is kept between 18 mm to 22 mm. In the present embodiment, the sleeve 3 extends vertically into the sugar storage cavity 12 and is perpendicular to the flat plate 7. The distance between the lower end face of the sleeve 3 and the inner wall of the flat plate 7 in the vertical direction is 8 mm to 12 mm. In this way, it can ensure that air flows into the inlet end of the drawing pipeline 2 in time to form a mixture of sugar and air, thus avoiding blockage of the drawing pipeline 2 and speeding up the pumping rate.

Both the sleeve 3 and the drawing pipeline 2 can be made of stainless steel or plastic, preferably seamless steel pipes. The lower parts of both pipelines are flat, and a gap is left between the sleeve 3 and the drawing pipeline 2 to form a hollow sleeve. The sleeve 3 and the drawing pipeline 2 can be fixed by bolts or screws, or can be fixed by welding.

When the sugar drawing apparatus in the present embodiment is used in the production process of polyether polyol, firstly, the negative pressure pump of the reaction kettle is turned on to form a negative pressure in the reaction kettle, and then the sugar drawing control valve 8 is turned on, so that the sugar material in the sugar storage cavity 12 can enter the reactor kettle through the drawing pipeline 2 under the action of negative pressure. During the pumping process, air between the sleeve 3 and the drawing pipeline 2 is sucked by the suction at the bottom inlet of the drawing pipeline 2, and the air and sugar will be sucked into the drawing pipeline 2 from the inlet end together by the drawing pipeline 2 to form a mixture of sugar and air, which not only does not block the drawing pipeline 2, but also prevents sugar lumps from coagulating. Further, the cost of manual cleaning is reduced, the material pumping rate is accelerated, and the production efficiency is improved.

In addition, as shown in figure 1, the sugar storage cavity 12 is a trapezoidal groove enclosed by a plurality of inclined plates 4 and flat plates 7. The trapezoidal groove has a top notch and a bottom notch, and the top notch has a width greater than that of the bottom notch, so that a gap is generated after sugar material at the bottom is pumped away. Under the action of gravity, sugar material at the upper part falls and supplements the gap, thus sugar material is continuously pumped by the drawing pipeline and forming a virtuous circle until sugar in the sugar storage container is completely pumped away, thereby accelerating the sugar pumping speed.

In order to further improve the coagulation of sugar and the blockage of the drawing pipeline 2, as shown in Figure 1, the top feed port 11 of the sugar pool is covered with a filter screen plate 5 having a pore size of from 0.05 mm to 0.5 mm. As shown in figure 1, the filter screen 5 can be fixed on the inner wall of the baffle 6, wherein the inclined plate 4 and the baffle 6, as well as the baffle 6 and the filter screen 5, can be fixed by conventional bolts or screws or welding.

In addition, the center of the filter screen plate 5 is provided with a through hole through which the sleeve 3 and the drawing pipeline 2 can pass through. The through hole can be located at the very center of the filter screen plate. The drawing pipeline 2 and the sleeve 3 extend vertically into the sugar storage cavity 12, so that the sugar in the sugar storage cavity 12 is uniformly pumped to the reaction kettle. The outer wall of the sleeve 3 can be threaded and fixed to the filter screen plate 5 by bolts or welding, or can be fixed in the sugar storage cavity 12 by a bracket.

In addition, in order to improve the accumulation and coagulation of sugar between the flat plate 7 and the inclined plate 4, the flat plate 7 and the inclined plates 4 are connected through a circular arc transition connection, so as to speed up the pumping rate. The inclined plate 4 is a polished plate, which ensures that the sugar material will slide down to the bottom in time, thus being pumped out in time, and further accelerating the pumping rate.

### Embodiment 2

Provided is a polyurethane reaction system, which comprises the sugar drawing apparatus described in embodiment 1, and further comprises a reaction kettle. The reaction kettle is provided with a negative pressure device, and the reaction kettle is communicated with the sugar drawing apparatus through a drawing pipeline 2. The negative pressure device can be a negative pressure pump. When in use, sugar is firstly fed into a sugar pool, then the negative pressure pump is turned on, so that the reactor kettle is in a vacuum state, and then a sugar drawing control valve 8 is turned on to pump sugar. The reaction kettle is maintained at a vacuum state during the whole sugar pumping process. During the pumping process, air between the sleeve 3 and the drawing pipeline 2 is sucked by the suction at the bottom of the drawing pipeline 2, and the air and sugar will be sucked into the drawing pipeline 2 at the same time to form a mixture of sugar and air, which not only does not block the drawing pipeline 2, but also prevents sugar from coagulating. Further, the cost of manual cleaning is reduced, the material pumping rate is accelerated, and the production efficiency is improved.

Apparently, the aforementioned embodiments are merely examples illustrated for clearly describing the present application, rather than limiting the implementation ways thereof. For those skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present application.

## Claims

1. A sugar drawing apparatus, **characterized by** comprising:
a sugar storage container (1), provided with a feed port (11) thereon and a sugar storage cavity (12) therein;
a drawing pipeline (2) having one end extending into the sugar storage cavity (12) and the other end extending out of the sugar storage container (1) and communicated with a reaction container, and used for transferring sugar in the sugar storage cavity (12) into the reaction container; and
a sleeve (3) sleeved on the outside of the drawing pipeline (2), one end of the sleeve (3) extending into the sugar storage cavity (12) and the other end thereof extending out of the sugar storage container (1) and communicated with ambient air, and a flow channel for air to flow through being reserved between the sleeve (3) and the drawing pipeline (2).

2. The sugar drawing apparatus of claim 1, **characterized in that** the sugar storage cavity (12) is a trapezoidal groove having a top notch and a bottom notch, and the top notch has a width greater than that of the bottom notch.

3. The sugar drawing apparatus of claim 2, **characterized in that** the sugar storage container (1) comprises a plurality of inclined plates (4) located at a side and at least one flat plate (7) located at the bottom, and the inclined plates (4) are polished plates.

4. The sugar drawing apparatus of claim 3, **characterized in that** the flat plate (7) and the inclined plates (4) are connected through a circular arc transition connection.

5. The sugar drawing apparatus of any one of claims 1 to 4, **characterized in that** the sugar drawing apparatus further comprises a filter screen plate (5) connected to a top end of the sugar storage container (1), and the filter screen plate (5) is arranged on the feed port (11).

6. The sugar drawing apparatus of any one of claims 1 to 4, **characterized in that** a sugar drawing control valve (8) is provided on the pumping pipeline (2).

7. The sugar drawing apparatus of any one of claims 1 to 4, **characterized in that** the sleeve (3) and the drawing pipeline (2) extends vertically into the sugar storage cavity (12).

8. The sugar drawing apparatus of any one of claims 1 to 4, **characterized in that** a distance of 8 mm to 12 mm is provided between an end face of the drawing pipeline (2) close to the bottom of the sugar storage cavity (12) and the bottom face of the sugar storage cavity (12).

9. The sugar drawing apparatus of any one of claims 1-4, **characterized in that** a distance of 8 mm to 22mm is provided between an end face of the sleeve (3) close to the bottom of the sugar storage cavity (12) and the bottom face of the sugar storage cavity (12).

10. A polyether polyol production system, comprising the sugar drawing apparatus of any one of claims 1-9.
